# NEUE EUROPÄISCHE PATENTSCHRIFT

(11) **EP 3 828 433 B2**
(45) Veröffentlichungstag und Bekanntmachung des Hinweises auf die Entscheidung über den Einspruch: **19.08.2026**
(45) Hinweis auf die Patenterteilung: 10.08.2022
(21) Anmeldenummer: 21020023.4
(22) Anmeldetag: 17.04.2018
(51) Int. Cl.: F16D 55/2255, F16D 65/00

(54) **BLATTFEDER EINER NIEDERHALTERANORDNUNG FÜR DIE BREMSBELÄGE EINER SCHEIBENBREMSE**
FLAT SPRING OF A HOLD-DOWN ASSEMBLY FOR THE BRAKE PADS OF A DISC BRAKE
RESSORT À LAME D'UN ENSEMBLE DE RETENUE POUR LES GARNITURES DE FREIN D'UN FREIN À DISQUE

(30) Priorität: 18.04.2017 DE 102017108175
(43) Veröffentlichungstag der Anmeldung: 02.06.2021
(62) Dokumentnummer(n) der früheren Anmeldung(en) nach Art. 76 EPÜ: 18721679.1 / 3 612 747
(73) Patentinhaber: BPW Bergische Achsen KG, 51674 Wiehl (DE)
(72) Erfinder: Goyke, Georg, 51588 Nümbrecht (DE)
(74) Vertreter: DREISS Patentanwälte PartG mbB

(56) Entgegenhaltungen:
- EP-A1- 1 898 115
- EP-B1- 1 898 115
- DE-U1- 202006 021 291

## Beschreibung

Die Erfindung betrifft eine Blattfeder und einen Niederhalter einer Niederhalteranordnung für die Bremsbeläge einer Fahrzeug-Scheibenbremse, mit zwei Hauptseiten und aufeinanderfolgend einem ersten Federende, einem Federmittelabschnitt und einem zweiten Federende.

Eine derartige Blattfeder und Niederhalter sind aus der EP 1 898 115 B1 bekannt. Zur Befestigung und Sicherung der in einem Belagschacht des Bremssattels der Scheibenbremse angeordneten Bremsbeläge erstreckt sich eine zweiteilig aufgebaute Niederhalteranordnung über den Belagschacht und zugleich quer über die in dem Belagschacht angeordneten Bremsbeläge. Ein starr ausgebildeter Niederhalter der Niederhalteranordnung ist zu der Scheibenbremsachse hin gegen die Bremsbeläge abgestützt. Die Abstützung erfolgt unter Federkraft, wozu sich außen, längs des Niederhalters, eine mit ihren Enden gegenüber dem Bremssattel festgelegte Blattfeder erstreckt. Diese beaufschlagt den Niederhalter mit einer Niederhaltekraft zu der Scheibenbremsachse hin, wodurch die Bremsbeläge in ihren jeweiligen Aufnahmen in dem Bremssattel oder in einem Bremsträger gehalten werden. Der Niederhalter und die Blattfeder sind jeweils von solcher Länge, dass sie mit einem Ende bis in eine Ausnehmung in Gestalt eines Schlitzes in dem Bremssattel ragen. Die Umfangskontur des Schlitzes ist an die gemeinsame Querschnittskontur von Niederhalter und Blattfeder angepasst, wodurch der Niederhalter sowohl radial in Bezug auf die Scheibenbremsachse festgelegt ist, als auch quer dazu, d. h. in Umfangsrichtung der Bremsscheibe. Wegen der weitgehenden Anpassung an die gemeinsame Querschnittskontur von Niederhalter und Blattfeder ist der Schlitz in dem Bremssattel allerdings nicht einfach zu fertigen, vielmehr sind zu seiner Fertigung spezielle Fräswerkzeuge erforderlich.

Ferner wird in der DE 20 2006 021 291 U1 eine Blattfeder in Form eines Klipps vorgeschlagen, der quer zu einem Niederhalter mit einem Mittelabschnitt in einer Öffnung des Niederhalters eingeführt und über zwei seitliche Klemmschenkel, die die Flanken des Niederhalters umgreifen, an diesem arretiert ist. Dazu sind die Klammerschenkel des aus einem Federblech gebildeten Klipps so geformt, dass sich oberseitig zwei Anschläge ergeben, die zur Verschiebesicherung an der Aufnahmetasche außenseitig begrenzenden Wandung anliegen. Durch den Klipp wird eine axiale Verschiebesicherung des Haltebügels gewährleistet.

Der Erfindung liegt daher die **Aufgabe** zugrunde, die Befestigung der Elemente der unter anderem die Blattfeder umfassenden Niederhalteranordnung montage- und auch fertigungstechnisch einfacher zu gestalten, ohne dabei die Befestigung zu schwächen.

Hierzu wird eine Blattfeder und ein Niederhalter nach Anspruch 1 vorgeschlagen.

Die erste dieser Biegungen ist dafür bestimmt, den Längsverlauf der Blattfeder günstig an die Gestalt des Schlitzes und insbesondere an einen schrägen Verlauf der oberen Innenfläche des Schlitzes anzupassen. Die andere Biegung hingegen ist dazu bestimmt, sich gegen die Außenseite des Niederhalters abzustützen, und diesen so mit einer Federkraft in Richtung auf die Bremsbeläge zu beaufschlagen.

Gemäß einer Ausgestaltung der Blattfeder ist die erste Biegung, also die am nächsten zu dem ersten Federende angeordnete Biegung, auf dem ersten Sechstel der Gesamtlänge der Blattfeder angeordnet. Vorzugsweise ist diese erste Biegung in einem Abstand von 1,5 cm bis 3 cm zu dem ersten Formschlusselement angeordnet.

Die zweite Biegung hingegen, welche in montiertem Zustand zur Abstützung außen auf dem Niederhalter bestimmt ist, ist vorzugsweise auf dem mittleren Drittel der Gesamtlänge der Blattfeder angeordnet.

Gemäß einer weiteren Ausgestaltung der Blattfeder ist die Breite der beiden Hauptseiten der Blattfeder über die gesamte Länge der Blattfeder gleichbleibend.

Montagetechnisch ist von Vorteil, dass sich der Niederhalter in einer schräg verlaufenden Bewegung in den Schlitz des Bremssattels hinein bewegen lässt. Damit verbunden ist eine besonders platzsparende und trotzdem zu einer stabilen Festlegung des Niederhalters führende Lösung. Eine platzsparende Lösung ist bei einer Fahrzeug-Scheibenbremse insbesondere deshalb von Vorteil, da an der Bremssattelaußenseite nur ein geringer radialer Abstand gegenüber dem um den Bremssattel rotierenden Fahrzeugrad oder der Fahrzeugfelge besteht. Gerade im Bereich des Belagschachts steht nur sehr begrenzt Platz für eine stabile Befestigung des Niederhalters bzw. der Baueinheit aus Niederhalter und Blattfeder zur Verfügung.

Indem der Schlitz im Bremssattel, welcher die Enden von Niederhalter und Blattfeder aufnimmt, bezüglich der Drehachse der Bremsscheibe schräg angeordnet ist, lässt sich dieses Ende der Niederhalteranordnung mit wenig Platzbedarf, aber trotzdem stabil an dem Bremssattel festlegen.

Besonders vorteilhaft ist, wenn der Winkel, unter dem der Schlitz in Bezug auf die Drehachse der Bremsscheibe angeordnet ist, zwischen 10 ° und 35 ° und vorzugsweise zwischen 15 ° und 25 ° beträgt. Entsprechend sieht eine Ausgestaltung des Niederhalters vor, dass dessen erster Endabschnitt relativ zu dem Mittelabschnitt unter einem Winkel von 10 ° bis 35 °, vorzugsweise 15 ° bis 25 ° abgewinkelt ist. Insbesondere ist ein Winkel von ca. 20 ° vorteilhaft. Von Vorteil ist also, wenn der Schlitz relativ zu dem Mittelabschnitt die gleiche Neigung aufweist, wie der erste Endabschnitt des Niederhalters. Damit ist gemeint, dass sowohl der erste Endabschnitt des Niederhalters, als auch der Schlitz in Bezug zur Bremsscheibenachse unter demselben Winkel geneigt sind. Fertigungstechnisch ist dies einfach zu realisieren.

Vorzugsweise ist der Schlitz in seitlicher Richtung des Niederhalters jeweils offen. Der Schlitz ist also nur durch eine Rückwand, eine obere, der Drehachse der Bremsscheibe zugewandte Innenfläche und eine untere Innenfläche begrenzt.

Durch die einfache, da seitlich offene Form des Schlitzes lässt sich dieser einfach fertigen, beispielsweise direkt durch den Guss oder durch einfache spanende Bearbeitung des Bremssattels mit einem Fräswerkzeug. Dabei können die obere Innenfläche, die untere Innenfläche und die Rückwand des Schlitzes einfach geformt und bearbeitet werden. Diese Bearbeitung kann in einer einzigen Bearbeitungsbewegung mittels eines Scheibenfräsers erfolgen, indem dieser in einer schrägen Bewegung in Richtung der Tiefe des Schlitzes in den Bremssattel hineingefahren wird. Die Rückwand des Schlitzes erhält dadurch eine Kreisbogenform.

Zusätzlich besteht die Möglichkeit, den Scheibenfräser, nachdem dieser maximal in Richtung der Tiefe des Schlitzes eingefahren wurde, etwas seitlich zu bewegen und erst dann zurückzuziehen. Bei einer solchen Fertigung setzt sich die Rückwand des Schlitzes zusammen aus einem geraden Mittelabschnitt und daran stufenfrei anschließenden Kreisbogenabschnitten, deren Kreismittelpunkte sich außerhalb des Bremssattels befinden, und vorzugsweise über dem Belagschacht befinden.

Von Vorteil ist, wenn die an dem ersten Endabschnitt des Niederhalters angeordnete Aussparung in Richtung der Rückwand des Schlitzes sowie in Richtung dessen oberer und unterer Innenflächen offen ist und in seitlicher Richtung beidseits durch Seitenabschnitte des Niederhalters begrenzt ist.

Vorzugsweise weist diese Aussparung eine U-förmige Kontur auf. Im montierten Zustand liegt die stirnseitige Öffnung der U-förmigen Aussparung der Rückwand des sattelseitigen Schlitzes gegenüber. Die Blattfeder greift mit ihrem einen Ende in die Aussparung ein, und zwar vorzugsweise mit ihrer gesamten Breite.

Insbesondere ist dann vorteilhaft, dass sich die Blattfeder federelastisch zumindest an der oberen Innenfläche des Schlitzes und außen an dem Mittelabschnitt des Niederhalters abstützt. Damit ist einerseits eine Befestigung des Niederhalters in einer Richtung vertikal zur Bremsscheibenachse gegenüber den Bremspads bzw. Bremsbelägen, und andererseits gegenüber dem Bremssattel gewährleistet. Durch eine solch einfache Befestigung wird der Herstellungsaufwand für die genannten Bauteile deutlich reduziert.

In Bezug auf den Niederhalter und dessen Stabilität ist von Vorteil, wenn dieser zumindest auf seinem Mittelabschnitt als eine Rinne aus einer langgestreckten Basis und an den Seiten der Basis angeordneten Seitenflanken ausgebildet ist. Die beiden Seitenflanken können noch zusätzlich verlängert sein, indem sie nicht nur entlang der Basis, sondern außerdem entlang des ersten Endabschnitts angeordnet sind.

Hinsichtlich des Bremssattels wird vorgeschlagen, dass zumindest die obere Innenfläche des in dem Bremssattel ausgebildeten Schlitzes in einem Winkel schräg zu der Drehachse der Bremsscheibe angeordnet ist. Dieser Winkel beträgt vorzugsweise zwischen 10 ° und 35 °, und besonders bevorzugt zwischen 15 ° und 25 °.

Um ein Schwächen des Bremssattels im Bereich der Befestigung der Niederhalteranordnung zu vermeiden, sieht eine besonders vorteilhafte Ausgestaltung des Bremssattels vor, dass die Materialdicke, welche der Bremssattel zwischen der oberen Innenfläche des Schlitzes und der Außenseite des Bremssattels aufweist, ausgehend von dem Belagschacht zunimmt. Vorzugsweise nimmt die Materialdicke in Form eines sich erweiternden Keils zu.

Damit die Fertigung des Schlitzes mittels eines Standard-Scheibenfräsers erfolgen kann, ist vorzugsweise auch die untere Innenfläche des Schlitzes in einem Winkel schräg zu der Achse angeordnet, wobei die untere Innenfläche vorzugsweise parallel zu der oberen Innenfläche angeordnet ist.

Durch die Verwendung eines rotierenden Scheibenfräsers ergibt sich eine Gestaltung der Rückwand des Schlitzes dergestalt, dass sich diese Rückwand auf einem Kreisbogen erstreckt, dessen Kreismittelpunkt sich außerhalb des Bremssattels befindet, und vorzugsweise über dem Belagschacht. Zusätzlich besteht die Möglichkeit, den Scheibenfräser, nachdem dieser maximal in Richtung der Tiefe des Schlitzes eingefahren wurde, etwas seitlich zu bewegen und erst dann zurückzuziehen. Bei einer solchen Fertigung setzt sich die Rückwand des Schlitzes zusammen aus einem geraden Mittelabschnitt und daran stufenfrei anschließenden Kreisbogenabschnitten, deren Kreismittelpunkte sich außerhalb des Bremssattels befinden, und vorzugsweise über dem Belagschacht befinden.

Hinsichtlich des Niederhalters wird vorgeschlagen, dass der erste Endabschnitt des Niederhalters relativ zu dem Mittelabschnitt abgewinkelt ist.

Der erste Endabschnitt des Niederhalters ist mit einer Aussparung zum Eingriff der Blattfeder versehen.

Gemeinsam mit den anderen Komponenten der Scheibenbremse ist dadurch eine vereinfachte Montage des Niederhalters gegenüber dem Bremssattel sowie den Bremspads beziehungsweise Bremsbelägen ermöglicht. Dazu trägt besonders bei, wenn der erste Endabschnitt relativ zu dem Mittelabschnitt unter einem Winkel von 10 ° bis 35 °, vorzugsweise 15 ° bis 25 °, abgewinkelt ist.

Die Aussparung im Bereich des ersten Endabschnitts des Niederhalters ist vorzugsweise von U-förmiger Kontur und ist in seitlicher Richtung beidseits durch Seitenabschnitte des Niederhalters begrenzt. Bei den Seitenabschnitten handelt es sich freilich nicht um gesonderte Bauteilkomponenten. Vielmehr wird die Aussparung in einen vorgeformten Niedergehalter eingearbeitet, z. B. durch Stanzen oder Fräsen. Auch kann die Aussparung direkt bei der Herstellung des Niederhalters geformt werden. Die Aussparung ist nach oben und unten sowie stirnseitig von dem Niederhalter weg geöffnet.

Vorzugsweise ist der Niederhalter zumindest auf seinem Mittelabschnitt als eine Rinne aus einer langgestreckten Basis und an den Seiten der Basis angeordneten Seitenflanken ausgebildet. Diese bewirken unter anderem eine Verstärkung des Niederhalters.

Die Breite der Rinne ist vorzugsweise gleich der Breite der Aussparung am Endabschnitt des Niederhalters.

In Bezug auf den Niederhalter und dessen Stabilität kann es von Vorteil sein, wenn die beiden Seitenflanken zusätzlich verlängert sind, indem sie nicht nur entlang der Basis, sondern außerdem entlang des ersten Endabschnitts angeordnet sind. Diese zusätzlichen Seitenflankenabschnitte können dazu dienen, den im Schlitz des Bremssattels sitzenden Niederhalter zusätzlich seitlich zu stützen.

Ferner ist vorteilhaft, dass den Abschluss des ersten Endabschnitts eine Stirnseite bildet, die sich auf einem Kreisbogen erstreckt, dessen Kreismittelpunkt sich außerhalb des Niederhalters befindet, und vorzugsweise über dem Mittelabschnitt befindet.

Konkrete Ausgestaltungen einer Scheibenbremse, eines Bremssattels, eines Niederhalters und einer Blattfeder werden im Folgenden anhand der Zeichnungen näher erläutert. Darin zeigen:
- Fig. 1: eine perspektivische Darstellung des Bremssattels einer Fahrzeug-Scheibenbremse einschließlich des im Bremssattel ausgebildeten Belagschachts mit einem darin angeordneten Bremsbelag, sowie einer Niederhalteranordnung über dem Belagschacht;
- Fig. 2: eine vergrößerte Ansicht des Gegenstandes nach Fig. 1, jedoch ohne die Teile der in Fig. 1 komplett wiedergegebenen Niederhalteranordnung;
- Fig. 3: die Gegenstände nach Fig. 1 in einem Längsschnitt durch den Bremssattel;
- Fig. 3a: einen der Fig. 3 entsprechenden Längsschnitt, jedoch ausschließlich durch den Bremssattel selbst und mit zusätzlicher Darstellung eines in Bearbeitungsstellung vor dem Bremssattel positionierten Scheibenfräsers;
- Fig. 4: den linken Bereich der Fig. 3 in größerem Maßstab;
- Fig. 5a: den linken Bereich der Fig. 1 in größerem Maßstab;
- Fig. 5b: denselben Bereich wie Fig. 5a, allerdings bei fehlendem Bremsbelag;
- Fig. 6: eine perspektivische Darstellung nur des Bremsbelags mit dem Betrachter zugewandter Rückenplatte;
- Fig. 7: in perspektivischer Darstellung nur den an dem Bremssattel verwendeten Niederhalter der Niederhalteranordnung;
- Fig. 8: in perspektivischer Darstellung nur die an dem Bremssattel verwendete Blattfeder als Bestandteil der Niederhalteanordnung;
- Fig. 9: in perspektivischer Darstellung nur die Blattfeder und den Niederhalter als die wesentlichen Komponenten der Niederhalteanordnung;
- Fig. 10: in perspektivischer Darstellung nur den an dem Bremssattel verwendeten Bügel, welcher zugleich als Widerlagerelement und als Sperrelement dient;
- Fig. 11: in perspektivischer Darstellung eine zweite Ausführungsform des Niederhalters, und
- Fig. 12: den Niederhalter nach Fig. 11 in einem Längsschnitt.

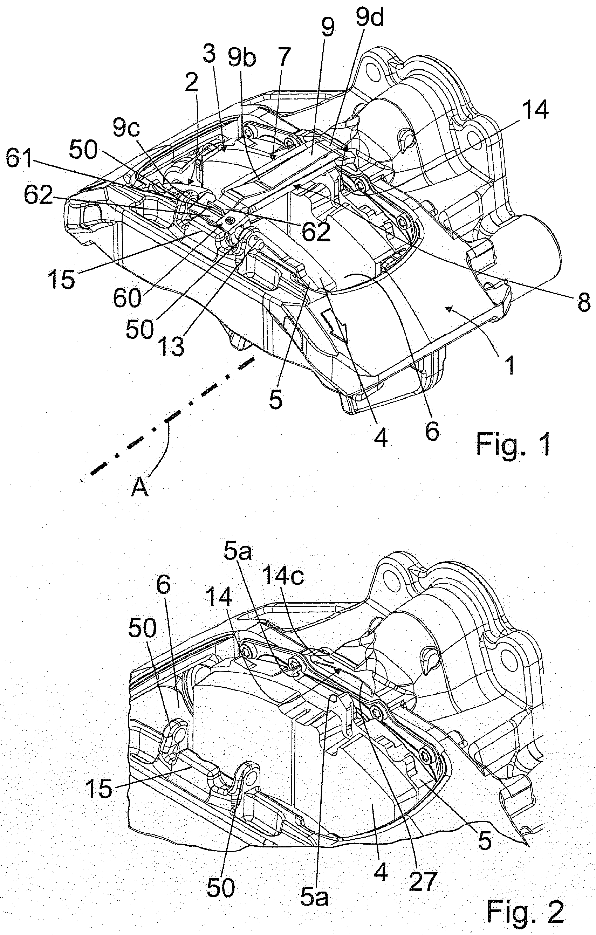

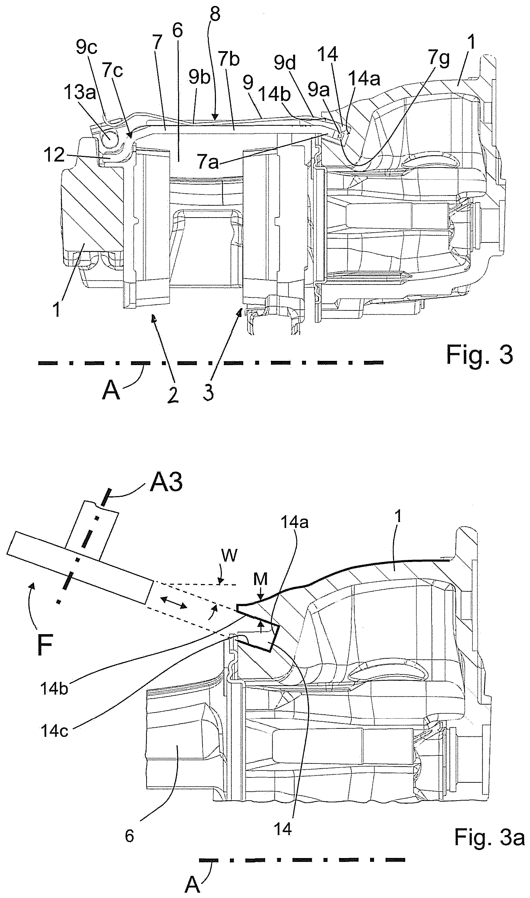

Die Figuren 1 - 3a zeigen den zentralen Teil des Bremssattels 1 einer Fahrzeug-Scheibenbremse für Nutzfahrzeuge. Figur 2 zeigt den Bremssattel in einer vergrößerten Ansicht, Figur 3 und Fig. 3a in einem Längsschnitt. Die Scheibenbremse kann vom Gleitsattel-Bautyp oder vom Festsattel-Bautyp sein. Zu jeder Seite der nur anhand ihrer Drehachse A wiedergegebenen Bremsscheibe ist jeweils ein Bremsbelag angeordnet (Fig. 3). Zur Aufnahme der Bremsbeläge 2, 3 ist der Bremssattel 1 mit einem Belagschacht 6 versehen, über den sich ein Belagniederhalter 7 erstreckt. Der Belagniederhalter 7 überbrückt den Belagschacht 6 in der Weise, dass sich der Belagniederhalter 7 quer über beide Bremsbeläge 2, 3 erstreckt, nämlich dem fahrzeugaußen angeordneten Bremsbelag 2 und dem fahrzeuginnen angeordneten Bremsbelag 3, welche hier unterschiedlich gestaltet sind.

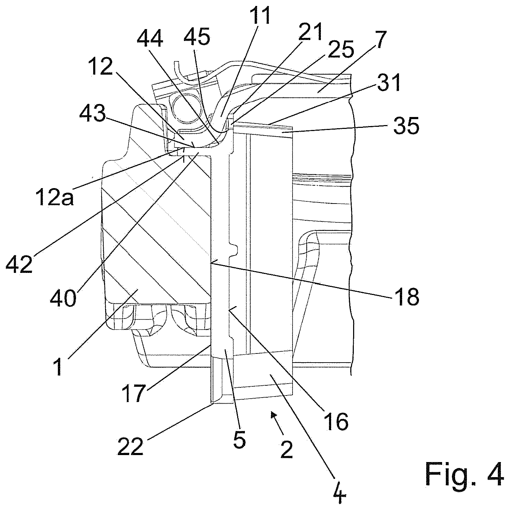

Die Bremsbeläge 2, 3 bestehen gemäß Fig. 4 jeweils aus dem eigentlichen Reibbelag 4 sowie einer Rückenplatte 5. Die Rückenplatte 5 besteht vorzugsweise aus Gussmetall. Die Rückenplatte 5 dient der besseren Verteilung des Bremsdrucks über die Belagfläche. Außerdem übernimmt sie die Führung und die Abstützung des Bremsbelags entweder an dem Bremssattel 1 selbst, oder an einem achsfesten Bremsträger.

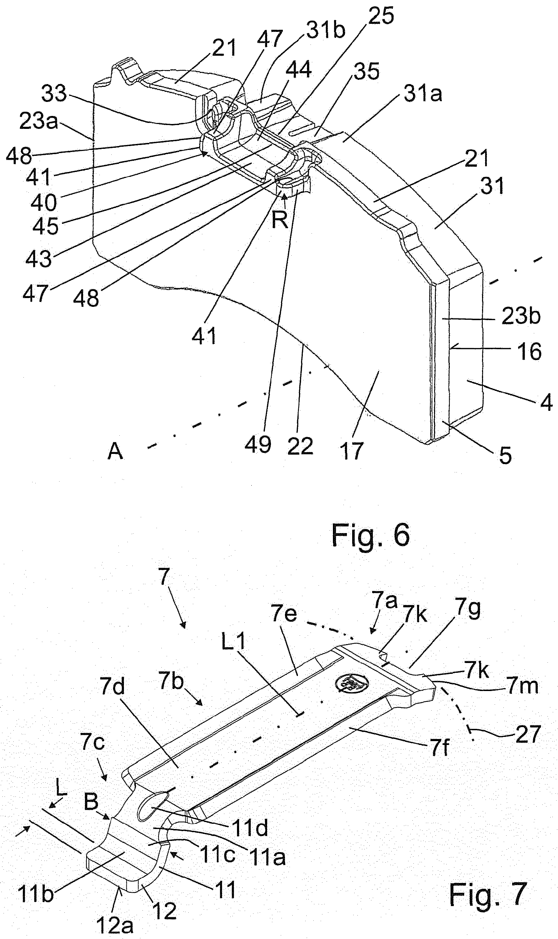

Der in Fig. 7 als Einzelteil wiedergegebene Belagniederhalter 7 ist längs seiner Längsmittellinie L1 länglich gestaltet und erstreckt sich mit dem größten Teil seiner Länge parallel zu der Achse A, um die die Bremsscheibe rotiert. Sein rechts wiedergegebener erster Endabschnitt 7a, also das fahrzeuginnere Ende des Niederhalters 7, ist unmittelbar in dem Bremssattel 1 aufgenommen, wozu der erste Endabschnitt 7a des Niederhalters 7 in einem Schlitz 14 (Fig. 3) des Bremssattels 1 sitzt. Der andere Endabschnitt 7c des Niederhalters 7 ist mittels unter anderem eines Bolzens mittelbar an dem Bremssattel 1 befestigt, was noch näher erläutert werden wird.

Zur Sicherung der beiden Bremsbeläge 2, 3 in dem Belagschacht 6 ist der Niederhalter 7 als ein starrer Bügel ausgebildet, und mit einer biegeelastischen Blattfeder 9 zu einer Niederhalteanordnung 8 kombiniert (Fig. 3). Aufgabe der zweiteiligen Niederhalteanordnung 8 ist es, beide Bremsbeläge 2, 3 so gegenüber dem Belagschacht 6 zu fixieren, dass die Bremsbeläge 2, 3 nicht nach radial außen, bezogen auf die Achse A der Bremsscheibe, aus dem Belagschacht 6 heraustreten oder herausfallen können.

Der Niederhalter 7 ist auf dem überwiegenden Teil seiner Gesamtlänge und insbesondere auf seinem Mittelabschnitt 7b von rinnenförmigem Querschnitt mit einer auf der Längsmittellinie L1 des Niederhalters 7 angeordneten Basis 7d, an die sich längs beider Längsränder der Basis 7d Seitenflanken 7e, 7f anschließen, die den Mittelabschnitt 7b des Niederhalters 7 gegenüber Biegekräften verstärken.

An den durch die Basis 7d gebildeten, flachen Boden der Rinne, welcher in etwa die Breite der Blattfeder 9 aufweist, schließen sich zu beiden Seiten die Seitenflanken 7e, 7f in einem Winkel zwischen 15 ° und 90 ° an.

Mit der Basis 7d stützt sich der Niederhalter 7 unmittelbar auf dem oberen Rand der Belagrückenplatte 5 des innenliegenden Bremsbelags 3 ab. Zugleich können sich die Flanken 7e, 7f des Niederhalters seitlich abstützen, und zwar an Anschlägen 5a am oberen Rand der Belagrückenplatte 5. Die beiden Anschläge 5a verhindern, dass der Niederhalter 7 größere seitliche Bewegungen relativ zu dem innenliegenden Bremsbelag 3 ausführen kann.

Die aus einem Federstahl bestehende Blattfeder 9 erstreckt sich ebenfalls auf der Längsmittellinie L1. Sie ist mit einem Federende 9a in einem ersten Federwiderlager, und mit dem anderen Federende 9c in einem zweiten Federwiderlager befestigt. Beide Befestigungen sind lösbar, um die Feder 9 und den darunter angeordneten Belagniederhalter 7 zu entfernen, und so zum Austausch der Bremsbeläge 2, 3 von außen her an den Belagschacht 6 zu gelangen.

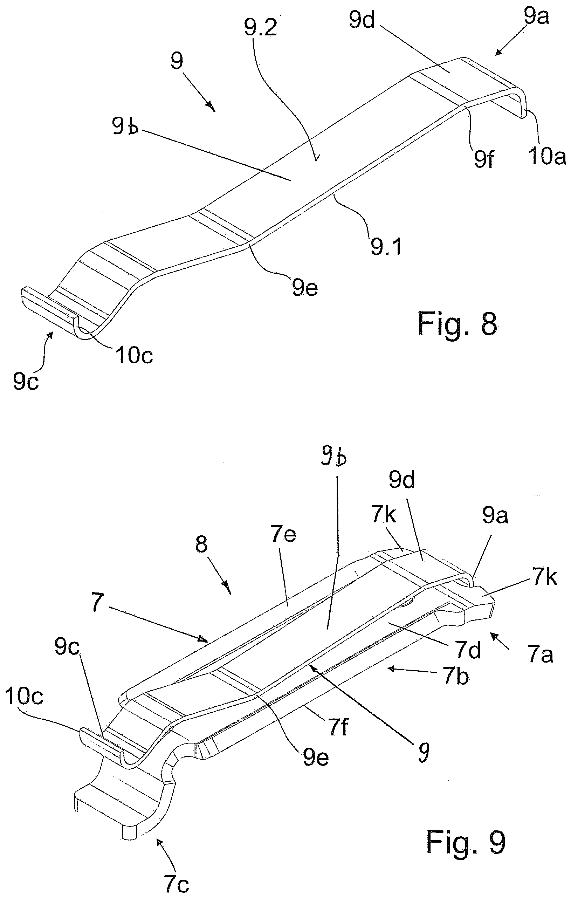

Die Blattfeder 9 erstreckt sich auf der Außenseite des Niederhalters 7 längs zu diesem, und sie ist von außen her gegen den Niederhalter 7 abgestützt, insbesondere gegen dessen Mittelabschnitt 7b im Bereich der Basis 7d (siehe Fign. 3, 9), wodurch dieser zu beiden Bremsbelägen 2, 3 hin federbelastet ist. Daher stützt sich der Niederhalter 7, obwohl selbst starr, unter dauernder Federkraft gegen beide Bremsbeläge 2, 3 ab und beaufschlagt diese jeweils mit einer zu der Drehachse A hin gerichteten Kraft.

Gemäß den Figuren 8 und 9 stützt sich die Blattfeder 9 nur mit einem sehr kurzen, als Knick bzw. Biegung 9e gestalteten Längsabschnitt außen an dem Belagniederhalter 7 ab. Auf diesem kurzen Längsabschnitt, der sich auf dem mittleren Drittel der Länge der Blattfeder 9 und über dem Belagschacht 6 befindet, ist die Blattfeder 9 daher mit der Biegung bzw. dem Knick 9e versehen, der sich quer zur Längserstreckung der Blattfeder 9 erstreckt. An die Biegung 9e schließen zu beiden Seiten Mittelabschnitte der Blattfeder an. Aber nur mit der Biegungsaußenseite der Biegung 9e liegt die Blattfeder 9 an dem Mittelabschnitt 7b des Niederhalters 7 an. Nur am Ort dieser diskreten Anlage wird daher der Niederhalter 7 mit der Federkraft in Richtung auf die Bremsbeläge beaufschlagt.

Insgesamt ist die Blattfeder gemäß Fig. 8 charakterisiert durch ihre obere Hauptseite 9.2, ihre untere Hauptseite 9.1 und in Längsrichtung aufeinanderfolgend das erste Federende 9a, den Federmittelabschnitt 9b und schließlich das zweite Federende 9c. Die Blattfeder 9 ist über ihre gesamte Länge von konstanter Breite, was die Herstellung vereinfacht.

Den äußersten Abschluss der Federenden 9a, 9c bilden jeweils Formschlusselemente 10a, 10c, bei denen es sich um Abwinklungen gegenüber der Haupterstreckung der Blattfeder handelt. Bezüglich der Hauptseiten 9.1, 9.2 erstrecken sich die Formschlusselemente 10a, 10c derart in entgegengesetzte Richtungen von der Haupterstreckung der Blattfeder weg, dass sich das erste Formschlusselement 10a an der ersten Hauptseite 9.1, und das zweite Formschlusselement 10c an der zweiten Hauptseite 9.2 befindet.

Die Blattfeder 9 weist auf ihrem Mittelabschnitt 9b die zwei Knicke bzw. Biegungen 9f, 9e entgegengesetzter Biegerichtung auf, von denen sich die Biegungsaußenseite der am nächsten zu dem ersten Federende 9a angeordneten Biegung 9f auf der zweiten Hauptseite 9.2, hingegen die Biegungsaußenseite der anderen Biegung 9e auf der ersten Hauptseite 9.1 befindet.

Die Biegung 9f befindet sich in montiertem Zustand gerade außerhalb eines Schlitzes 14 im Bremssattel, d.h. noch vor der Schlitzöffnung. Denn zwischen der Biegung 9f und dem Federende 9a mit dem Formschlusselement 10a befindet sich nur noch ein kurzer, gerader Federabschnitt 9d. Seine Länge beträgt weniger als ein Sechstel der Gesamtlänge der Blattfeder. Vor allem mit diesem kurzen Federabschnitt 9d stützt sich die Blattfeder 9 an der oberen Innenfläche 14b des Schlitzes 14 im Bremssattel ab.

Die andere, entgegengesetzte Biegung 9e hingegen ist zentraler angeordnet und befindet sich auf dem mittleren Drittel der Länge der Blattfeder in deren Mittelabschnitt 9b.

Ein erstes Federwiderlager für die Blattfeder 9 befindet sich in Form des Schlitzes 14 fahrzeuginnen am Bremssattel 1, ein zweites Federwiderlager fahrzeugaußen neben dem Belagschacht 6. Das fahrzeugäußere Federwiderlager weist für die Festlegung des betreffenden Federendes 9c der Blattfeder 9 einen Bolzen 13 auf. Hingegen ist der Bremssattel 1 zur Bildung des fahrzeuginneren Federwiderlagers mit der zu dem Belagschacht 6 hin offenen Ausnehmung in Gestalt des Schlitzes 14 versehen. Dieser bietet Platz zugleich für das dortige Ende des Niederhalters 7, wie auch für das dortige Federende 9a der Blattfeder, nämlich für einen kurzen, weniger als 3 cm langen Endabschnitt der Blattfeder 9.

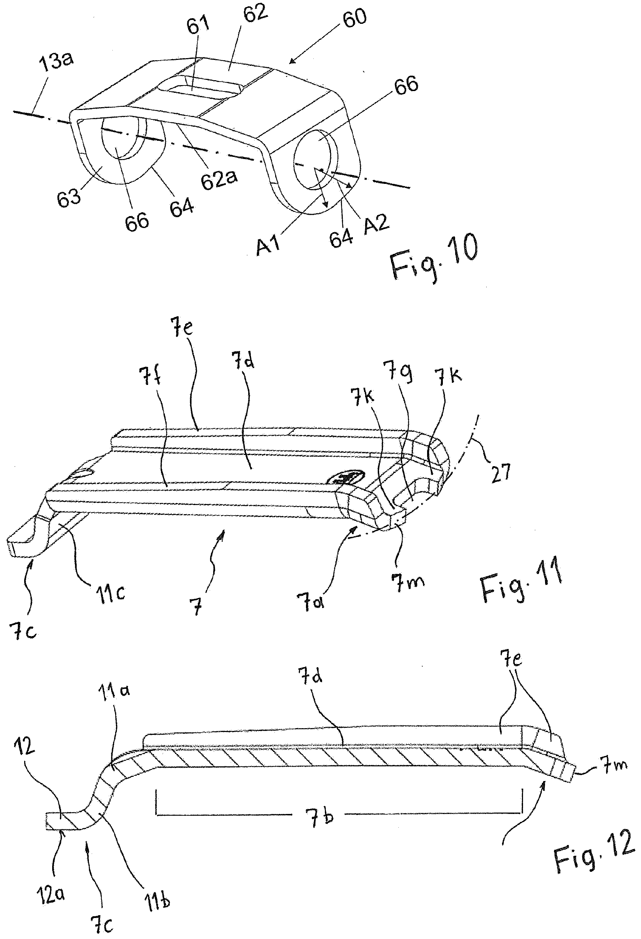

Für die Montage der Niederhalteanordnung 8 aus Niederhalter 7 und Blattfeder 9 ist es vorgesehen, dass die in einer schräg verlaufenden Bewegung gemeinsam in den Schlitz 14 des Bremssattels 1 eingeführten Enden dieser beiden Bauteile in Längsrichtung zueinander verriegelt sind. Hierzu ist der Niederhalter 7 an diesem Ende mit einer Aussparung 7g versehen ( Fig. 7 und Fig. 11). In die Aussparung 7g greift das nach unten zum Bremssattel hin abgebogene Formschlusselement 10a der Blattfeder 9 formschlüssig ein, ähnlich einem Haken in einer dazu passenden Öse. Diese Längsverriegelung der Blattfeder 9 am Niederhalter 7 hat zur Folge dass, sobald sich das Ende 7a des Niederhalters 7 in dem Schlitz 14 des Bremssattels 1 befindet, die Blattfeder 9 in Längsrichtung verriegelt, nämlich axial an dem Niederhalter 7 gefangen ist. Dies wird erreicht, indem die Höhe des Schlitzes 14 und die Länge des Formschlusselements 10a, welches sich quer zu dem Schlitz erstreckt, so bemessen sind, dass es in dem Schlitz 14 nicht möglich ist, das Formschlusselement 10a aus der Aussparung 7g des Niederhalters zu lösen.

Diese Maßnahme dient der Sicherheit und erleichtert das anschließende Festlegen des Niederhalters 7 und vor allem der Blattfeder 9 an ihrem anderen Ende, also im Bereich des links wiedergegebenen, fahrzeugaußen gelegenen Federwiderlagers.

Der im Bremssattel 1 ausgebildete Schlitz 14 ist in seitlicher Richtung des Niederhalters 7 jeweils offen, sodass der Schlitz 14 nur durch eine Rückwand 14a, eine obere Innenfläche 14b und eine untere Innenfläche 14c des Bremssattels begrenzt ist. Dabei gilt als obere Innenfläche 14b jene Wand des Schlitzes 14, welche der Achse bzw. Drehachse A der Scheibenbremse zugewandt ist. Als untere Innenfläche 14c gilt jene Wand des Schlitzes 14, welche der Achse bzw. Drehachse A abgewandt ist. Vorzugsweise erstrecken sich die beiden Innenflächen 14b, 14c parallel zueinander, begrenzen in diesem Fall also einen Parallelschlitz.

Der Niederhalter 7 ist auf seinem Endabschnitt 7a relativ zu dem Mittelabschnitt 7b abgewinkelt, d. h. geneigt. Nach der Abwinklung verläuft der Endabschnitt 7a des Niederhalters 7 bis zu der der Rückwand 14a gegenüberliegenden Stirnseite 7m vollkommen gerade, d.h. nicht gebogen oder gekröpft. Im montierten Zustand ist die Mittellinie L1 des Niederhalters 7 im Wesentlichen parallel zur Bremsscheibenachse A ausgerichtet. Nur der Endabschnitt 7a ist relativ zu der Mittellinie L1 und damit auch zur Bremsscheibenachse A um 10 ° bis 35 ° geneigt bzw. abgewinkelt, vorzugsweise um 15 ° bis 25 ° und besonders bevorzugt um 20 °.

Gemäß Figur 3a ist auch der Schlitz 14 im Bremssattel 1 in Richtung seiner Schlitztiefe schräg zu der Achse A angeordnet. Der Winkel W der Schrägstellung gegenüber der Achse A ist im Wesentlichen gleich der Abwinklung des geneigten Endabschnitts 7a des Niederhalters 7. Die Blattfeder 9 stützt sich somit unter Federkraft an der oberen, der Achse A zugewandten Innenfläche 14b des Schlitzes 14 ab.

Die Figur 3a illustriert das Verfahren zur Herstellung des Schlitzes 14 mittels eines Fräswerkzeuges F. Denn durch die einfache Form des Schlitzes 14 mit fehlenden Seitenwänden lässt sich dieser einfach herstellen.

Durch den auf der Achse A3 rotierenden Scheibenfräser F werden in einer einzigen Zustellung entsprechend dem in Fig. 3a eingetragenen Doppelpfeil die obere Innenfläche 14b, die dazu parallele untere Innenfläche 14c und die Rückwand 14a des Schlitzes bearbeitet. Die Bearbeitung erfolgt also durch eine einzige Hin- und anschließende Rückbewegung des Scheibenfräsers F. Diese Bewegungen erfolgen unter dem Winkel W und rechtwinklig zur Fräserachse A3.

Die Breite der Scheibe des Fräsers F bestimmt die geschaffene Höhe des Schlitzes 14. Die Richtung der Zustellung des Scheibenfräsers F hat zur Folge, dass die entstehende Rückwand 14a des Schlitzes nicht eben ist, sondern die Gestalt eines Kreisbogens hat, dessen Kreismittelpunkt außerhalb des Schlitzes 14 liegt. In der Figur 7 und der Figur 11 ist dieser Kreisbogen 27 illustriert, allerdings hier anhand der korrespondierenden kreisförmigen Kontur der Stirnseite 7m des Niederhalters 7. Der gedachte Kreismittelpunkt des Kreisbogens 27 befindet sich außerhalb des Bremssattels, nämlich außen über dem Belagschacht 6.

Alternativ besteht die Möglichkeit, den Scheibenfräser F, nachdem dieser maximal in Richtung der Tiefe des Schlitzes 14 eingefahren wurde, etwas seitlich zu bewegen und erst dann zurückzuziehen. Dabei bildet sich eine Rückwand 14a, die sich aus einem geraden Mittelabschnitt und daran stufenfrei anschließenden Kreisbogenabschnitten zusammensetzt, wobei sich wiederum die Kreismittelpunkte der Kreisbogenabschnitte außerhalb des Bremssattels über dem Belagschacht 6 befinden.

Indem die obere Innenfläche 14b des Schlitzes 14 unter dem Winkel W geneigt ist, ergeben sich Vorteile für die Festigkeit des Bremssattels 1. Denn die Materialdicke M (Fig. 3), welche der Bremssattel 1 zwischen der oberen Innenfläche 14b und der Bremssattelaußenseite aufweist, nimmt ausgehend von dem Belagschacht 6 deutlich zu, nämlich in Form eines sich erweiternden Keils. Zudem wird an dieser wichtigen Stelle des Bremssattels 1 wertvoller Platz eingespart. Dies ist deshalb von Vorteil, da an dieser Stelle der Bremssattelaußenseite nur ein geringer radialer Abstand bis zu dem um den Bremssattel rotierenden Fahrzeugrad oder der Fahrzeugfelge besteht. Gerade im Bereich rund um den Belagschacht ist üblicherweise nur sehr begrenzt Platz für die Befestigung des Niederhalters 7 bzw. der Baueinheit aus Niederhalter 7 und Blattfeder 9.

Die Aussparung 7g des Niederhalters 7 ist in Richtung der Rückwand 14a, der oberen Innenfläche 14b und unteren Innenfläche 14c des Schlitzes 14 geöffnet, hingegen in seitlicher Richtung, d.h. in Richtung der seitlichen Öffnungen des Schlitzes 14 durch Seitenabschnitte 7k des ersten Endabschnittes 7a des Niederhalters 7 begrenzt. Auch die Seitenabschnitte 7k verlaufen geneigt zum Mittelabschnitt 7b, denn sie sind Bestandteil des insgesamt geneigt zum Mittelabschnitt 7b verlaufenden ersten Endabschnitts 7a. Die Aussparung 7g ist also von nach oben und unten offener U-förmiger Gestalt bzw. Kontur, wobei die stirnseitige Öffnung der U-förmigen Aussparung 7g in Richtung der Rückwand 14a des Schlitzes 14 weist.

Gemäß Fig. 7 ist der Niederhalter 7 auf seinem fahrzeugaußen gelegenen zweiten Endabschnitt 7c mit einer Breite B schmaler gestaltet, als auf dem vergleichsweise längeren, die Gestalt einer Rinne aufweisenden Längsabschnitt bzw. Mittelabschnitt 7b. Die Breite B ist auf diesem Endabschnitt 7c nicht größer als die Breite der Basis 7d. Vor allem ist der Niederhalter 7 auf diesem Endabschnitt mit einer an die gestreckt verlaufende Basis 7d anschließenden Kröpfung 11 versehen, indem der Niederhalter 7, ausgehend von der Basis 7d, zunächst eine erste Biegung 11a nach unten, und daran anschließend eine zweite Biegung 11b als Gegenbiegung aufweist. An die zweite Biegung 11b schließt sich, als fahrzeugäußeres Ende des Niederhalters 7, unmittelbar ein gerader Längsabschnitt 12 an. Der gerade Längsabschnitt 12 liegt auf diese Weise tiefer bzw. näher an der Drehachse A, als die Basis 7c des rinnenförmigen Mittelabschnitts 7b.

Vorzugsweise ist die S-förmige Kröpfung 11 so ausgestaltet, dass deren zweite Biegung 11b, welche unmittelbar in den geraden Endabschnitt 12 übergeht, nicht unmittelbar an die erste Biegung 11a anschließt, sondern sich dazwischen noch ein kurzer, gerade verlaufender Abschnitt 11c befindet. Dessen Winkel zu dem rinnenförmigen Längsabschnitt beträgt beispielsweise 110°.

Der Längsabschnitt 12 erstreckt sich auf einer Länge L im Wesentlichen parallel zu der Drehachse A und parallel versetzt zu dem deutlich längeren, rinnenförmigen Mittelabschnitt 7b. Beispielsweise kann der Niederhalter 7 eine Gesamtlänge von etwa 150 mm aufweisen. Dann verläuft der Endabschnitt 12 um 15 bis 20 mm versetzt zu der Basis 7d des rinnenförmigen Abschnitts

Der Bereich der Kröpfung 11 kann durch eine oder mehrere Versteifungssicken 11d verstärkt sein, da der Niederhalter 7 hier mit der Breite B relativ schlank ist, und Biegekräfte auftreten können. Vorzugsweise besteht der Niederhalter 7 aus gestanztem und verformtem Stahlblech mit einer Materialdicke von mindestens 4 mm.

Bei am Bremssattel montiertem Bolzen 13 wird dieser von der Kröpfung 11 oder dem das Ende des zweiten Endabschnittes 7c des Niederhalters 7 bildenden Längsabschnitt 12 ohne Berührungskontakt untergriffen (Fig. 4). Trotzdem ist dieser Endbereich des Niederhalters durch den oberhalb angeordneten Bolzen 13 so gefangen, dass er sich unter keinen Umständen nach außen von dem Belagschacht 6 lösen kann. Die Kröpfung 11 bzw. der Längsabschnitt 12 als Ende des zweiten Endabschnittes 7c des Niederhalters 7 weisen im montierten Zustand einen solchen Höhenabstand zu dem Bolzen 13 auf, dass es zu keinem Kontakt kommt.

Der Niederhalter 7 liegt von oben her auf den Rückenplatten 5 beider Bremsbeläge 2, 3 auf und ist dort zunächst nur in seiner Längsrichtung beweglich, hingegen quer dazu mittels seitlicher Formelemente der Bremsbeläge fixiert gehalten. Beide Bremsbeläge 2, 3 sind im Belagschacht 6 in Richtung der Drehachse A der Bremsscheibe frei beweglich und in Umfangsrichtung der Bremsscheibe mit einem gewissen Spiel geführt. Diese Kombination von Bewegungsfreiheiten führt dazu, dass der Niederhalter 7 an den Bremsbelägen 3 in seiner Längserstreckung frei und quer mit den Bremsbelägen 3 beschränkt beweglich bzw. schwimmend gelagert ist. Die Bewegung in seiner Längserstreckung wird in montiertem Zustand durch jeweilige Anschläge am Bremssattel 1 eng begrenzt. Hierzu sind die Anschlagflächen, zwischen denen sich der Niederhalter 7 bewegen kann, z. B. durch Fräsen des Bremssattels 1 mechanisch bearbeitet.

In Längsrichtung des Niederhalters 7 steht dessen zweitem Endabschnittes 7c ein an dem Bremssattel 1 angeformter Vorsprung 15 mit geringem Abstand gegenüber. Der Vorsprung 15 bildet daher einen Anschlag, welcher die Längsbeweglichkeit des Niederhalters 7 nach fahrzeugaußen begrenzt. Vorzugsweise erstreckt sich der Vorsprung 15 bis nahe an den Umfang des Bolzens 13, allerdings ohne den Bolzen 13 zu berühren.

Zwei einstückig an dem Bremssattel 1 angeformte Lagerböcke 50 weisen je eine Bohrung auf, in der der Bolzen 13 auf der Achse 13a sitzt. Damit sich der Bolzen 13 nicht in Bolzenlängsrichtung aus den Lagerböcken 50 und damit aus dem Sattel 1 lösen kann, sind an dem Bolzen 13 geeignete Sicherungsringe, Splinte oder dergleichen vorgesehen.

Die Fign. 1, 3 zeigen Einzelheiten der Festlegung des fahrzeugäußeren Federendes 9c der Blattfeder 9 an dem Widerlager. Bestandteil dieses Federwiderlagers ist außer dem Bolzen 13 ein Befestigungsbügel 60, der mittels des Bolzens 13 um die Bolzenachse 13a schwenkbeweglich mit dem Bremssattel 1 verbunden ist. Gegen die der Achse 13a zugewandte Innenseite bzw. Unterseite des Bügels 60 stützt sich die Blattfeder 9 mit ihrem Federende 9c ab. An diesem Federende 9c ist die Blattfeder mit dem sich nach oben erstreckenden Formschlusselement 10c versehen. Das Formschlusselement 10c greift in eine schlitzförmige Öffnung 61 in dem Bügel 60, und sichert so die Schwenkposition des Bügels 60.

Der in Fig. 10 als Einzelteil dargestellte Bügel 60 ist das fahrzeugäußere Widerlagerelement für die Blattfeder 9. Der Bügel 60 setzt sich aus einem zu der Achse 13a parallelen Mittelabschnitt 62, auf dem sich die Öffnung 61 befinden kann, und zwei in Bezug auf den Mittelabschnitt 62 ungefähr rechtwinklig angeordneten Seitenabschnitten 63 zusammen (Fig. 10). Diese Seitenabschnitte sind als Laschen 63 gestaltet und jeweils mit einer auf der Achse 13a angeordneten runden Öffnung 66 versehen. Indem die beiden Öffnungen 66 auf der Achse 13a zueinander fluchten, ist die Achse 13a zugleich die Fluchtungsachse der zwei Öffnungen 66. Durch beide Öffnungen zugleich tritt der Bolzen 13 hindurch.

Der der Scheibenbremsdrehachse A zugewandte Rand der Laschen 63 weist eine Randkontur 64 auf, die zu der Achse 13a hin gekrümmt ist. Der der Scheibenbremsachse A zugewandte Konturabschnitt der Kontur 64 bildet einen Anschlag, da der Konturverlauf dergestalt ist, dass die Kontur 64 teils einen größeren Abstand A1, teils einen geringeren Abstand A2 zu der Achse 13a aufweist. Zum Beispiel kann die Kontur 64 exzenterförmig sein oder sie kann kreisbogenförmig sein, dann allerdings mit Versatz zu der Achse 13a.

Der Bolzen 13 ist das Befestigungsmittel, um den als Widerlagerelement und als Sperrelement dienenden Bügel 60 lösbar an dem Bremssattel 1 zu befestigen. Zugleich liegt das Ende 9c der Blattfeder 9 unter Federspannung an der dem Bolzen 13 zugewandten Innenseite des Mittelabschnitts 62 an. Diese Innenseite ist daher das Widerlager 62a, an dem sich das Federende 9c abstützt. Die Summe dieser Maßnahmen führt zur Sicherung und Aufrechterhaltung der Biegespannung in der Blattfeder 9.

Eine zusätzliche Sicherungsmaßnahme ist das formschlüssige Eingreifen des an dem äu-ßersten Federende 9a ausgebildeten, nach oben abgewinkelten Formschlusselements 10c in die Öffnung 61 des Bügels 60.

Die Montage der Anordnung bestehend aus Belagniederhalter 7, Blattfeder 9, Bolzen 13 und Bügel 60 als Widerlagerelement und Sperrelement erfolgt, indem zunächst die Blattfeder 9 mit ihrem einen Ende 9a so auf den Niederhalter 7 gelegt wird, dass sie in die Aussparung 7g des fahrzeuginneren Endabschnitts 7a des Niederhalters 7 formschlüssig eingreift. Sodann werden die so vorläufig verbundenen Teile Niederhalter und Blattfeder in einer schräg verlaufenden Bewegung in den Schlitz 14 hineingeschoben. Der erste Endabschnitt 7a, der zu dem Mittelabschnitt 7b abgewinkelt ist, befindet sich dann zumindest teilweise mit der Blattfeder 9 innerhalb des zur Bremsscheibenachse A geneigten Schlitzes 14. Sodann wird der Niederhalter 7 an seinem anderen Ende nach unten geschwenkt, bis dieses andere Ende auf die Niederhaltefläche 43 gelangt. Dabei legt sich der Niederhalter zugleich von oben auf die Rückenplatte 5 des fahrzeuginneren Bremsbelags 3 zwischen die beiden Anschläge 5a.

In einem nächsten Schritt wird auf das andere Federende 9c der Bügel 60 aufgesetzt, was durch das Eingreifen des Formschlusselements in die Öffnung 61 des Bügels 60 erleichtert werden kann und so für den Monteur noch sicherer wird. Das Ende 9c der Feder 9 stützt sich dabei an dem Widerlager 62a innen an dem Bügel 60 ab. Nun wird nur der Bügel 60 durch manuellen Druck und unter Biegen der Blattfeder nach unten bewegt, bis sich der Bolzen 13 längs der Achse 13a in die Lagerböcke 50 und zugleich durch die Öffnungen 66 des Bügels 60 hindurch gelangt. Sodann kann die Druckausübung auf den Bügel 60 beendet werden, da die Spannkraft der Blattfeder 9 durch den das Widerlagerelement bildenden Bügel 60 in Verbindung mit dem Bolzen 13 sicher aufgenommen wird.

Die Blattfeder 9 hält mit Federvorspannkraft den Niederhalter 7 auf den Bremsbelägen 2, 3 und sorgt dafür, dass bei einem stärkeren Stoß, z. B. bei einer Schlaglochdurchfahrt, der nach außen abhebende Bremsbelag wieder in seine Ursprungsposition gedrückt wird. Sollte die Blattfeder 9 durch z. B. mechanische Einflüsse brechen und damit ihre Haltefunktion verlieren, ist der Niederhalter 7 durch den darüber angeordneten Bügel 60 und durch den Schlitz 14 immer noch so gehalten, dass die Bremsbeläge nicht verloren werden können.

Die in Fig. 7 wiedergegebene Kröpfung 11 des auf der fahrzeugäußeren Seite der Bremsscheibe gelegenen, schmaleren zweiten Endabschnitts 7c des Niederhalters 7 hat den Vorteil, dass in diesem Bereich Scheibenbremsteile radial weniger weit nach außen ragen und damit ein Beitrag geleistet wird, die bauliche Enge zu dem umgebenden, um die Bremse rotierenden Fahrzeugrad zu entschärfen. Allerdings führt die Kröpfung 11 zu einem Platzbedarf im Bereich des auf der fahrzeugäußeren Seite der Bremsscheibe angeordneten Bremsbelags 2. Dieser ist daher in besonderer Weise gestaltet, was im Folgenden näher erläutert wird.

Gemäß Fig. 6 setzt sich der auf der fahrzeugäußeren Seite der Bremsscheibe angeordnete Bremsbelag 2 aus dem zur Anlage gegen die Bremsscheibe bestimmten Reibbelag 4 und der stabilen Rückenplatte 5 zusammen. Letztere besteht z. B. aus gegossenem Stahl, wobei die Vorderseite als Befestigungsfläche 16 für den Reibbelag 4 ausgebildet ist, während die Rückseite 17 als Druckfläche zur Übertragung des Bremsdrucks ausgebildet ist. Denn mit dieser Rückseite 17 liegt die Rückenplatte 5 gegen eine entsprechende, Druck ausübende Fläche 18 des Bremssattels 1 an. Die Fläche 18 ist zugleich eine Wand des Belagschachts 6.

Die Umfangskontur der Rückenplatte 5 ist bestimmt durch einen oberen bzw., bezüglich der Drehachse A, äußeren Rand 21, einen der Drehachse A zugewandten inneren bzw. unteren Rand 22 und zwei sich zwischen dem oberen und dem unteren Rand erstreckende Seitenränder 23a, 23b, die parallel zueinander verlaufen.

Der obere bzw. äußere Rand 21 zeichnet sich durch einen Hauptverlauf aus, welcher die Form der Bremsscheibe aufgreift. Hierzu zeigt der obere Rand 21 hauptsächlich, d. h. auf seiner überwiegenden Länge, einen kreisbogenförmigen Verlauf, der die Kreisform am Umfang der runden Bremsscheibe übernimmt. Dies hat den Vorteil, dass der Bremsbelag 2 nicht über den technisch erforderlichen Umfang der Bremsscheibe radial nach außen vorsteht.

Mit den zwei Seitenrändern 23a, 23b ist die Rückenplatte 5 in Umfangsrichtung abgestützt, so dass die Bremsmomente auf den Bremssattel 1 oder alternativ auf einen achsfest montierten Bremsträger der Scheibenbremse übertragen werden. Zu einem geringeren Anteil kann die Übertragung der Bremsmomente auch über den unteren Rand 22 der Rückenplatte 5 auf den Bremsträger erfolgen, wenn ein Bremsträger vorhanden ist.

Auch der Reibbelag 4 zeichnet sich an seinem oberen bzw. äußeren Rand 31 durch einen Hauptverlauf aus, welcher die Form der Bremsscheibe aufgreift. Hierzu zeigt der obere Rand 31 hauptsächlich, d. h. auf seiner überwiegenden Länge, einen kreisbogenförmigen Verlauf, der die Kreisform am Umfang der runden Bremsscheibe übernimmt, wodurch auch dieser Rand nicht über den Umfang der Bremsscheibe nach radial außen vorsteht, zugleich aber ein Maximum an Kontaktfläche zwischen Reibbelag 4 und Bremsscheibe zur Verfügung steht.

Wenn die Ränder 21, 31 einen grundsätzlich bogenförmigen Verlauf aufweisen, schließt dies einzelne Abweichungen von dieser Hauptgestaltung ein. So kann außermittig in Reibbelag 4 und Rückenplatte 5 eine schmale Ausnehmung 33 angeordnet sein, welche der dortigen Befestigung eines elektrischen Bremsbelag-Verschleißsensors dient. Außerdem können an dem Rand 21, ohne Beeinträchtigung der bogenförmigen Hauptgestaltung des Randes, einzelne kleine Vorsprünge angeformt sein, welche zum Beispiel im Rahmen der Produktion des Bremsbelags von Vorteil sein können.

Um Platz und einen Freiraum für die Kröpfung 11 des Niederhalters 7 zu schaffen, ist der Hauptverlauf des oberen Randes 21 der Rückenplatte 5 genau in der Mitte zwischen den beiden Seitenrändern 23a, 23b durch eine partielle Absenkung 25 des Randes 21 unterbrochen. Die Absenkung 25 ist breiter als die Breite B des abgekröpften Niederhalterabschnitts.

Nur im Bereich dieser Absenkung 25 ist daher, bezogen auf den Abstand zur Drehachse A, die Höhe der Rückenplatte 5 soweit radial reduziert, dass sich in der Rückenplatte 5 ein Freiraum ergibt, durch den sich der Niederhalter 7 mit zumindest einem Teil seines Querschnitts erstreckt.

Ebenfalls um Platz für den Niederhalter 7 zu schaffen, weist in demselben Bereich auch der Reibbelag 4 einen Freiraum auf. Denn während der Reibbelag 4 an seinem Außenrand 31 ansonsten hauptsächlich bogenförmig verläuft, ist auch diese primäre Gestaltung in der Mitte zwischen den beiden Seitenrändern 23a, 23b durch eine Absenkung 35 des oberen Randes 31 unterbrochen. Die Absenkung 35 führt auch an der Umfangskontur des Reibbelags 4 zu einem Freiraum, durch den sich der Niederhalter 7 mit zumindest einem Teil seines Querschnitts erstrecken kann. Hierzu ist die Absenkung 35 breiter als die Breite B des abgekröpften Niederhalterabschnitts.

Der Boden der Absenkung 25 in der Rückenplatte 5 ist tiefer und damit näher zu der Drehachse A angeordnet, als jene Abschnitte 31a, 31b des oberen Randes 31 des Reibbelags 4, die sich an die in dem Reibbelag 4 ausgebildete Absenkung 35 in Umfangsrichtung unmittelbar anschließen.

Durch die Absenkung 25 wird daher ein Freiraum für das Queren des Niederhalters geschaffen. Dadurch nimmt der Niederhalter 7 auf diesem Teil seiner Länge eine Position weniger weit radial außen ein, was die durch die bauliche Enge zwischen den Bauteilen der Scheibenbremse und dem um die Bremse rotierenden Fahrzeugrad hervorgerufene Gefahr reduziert, dass es zu einem Schleifen von Bremsenteilen innen am rotierenden Fahrzeugrad kommt.

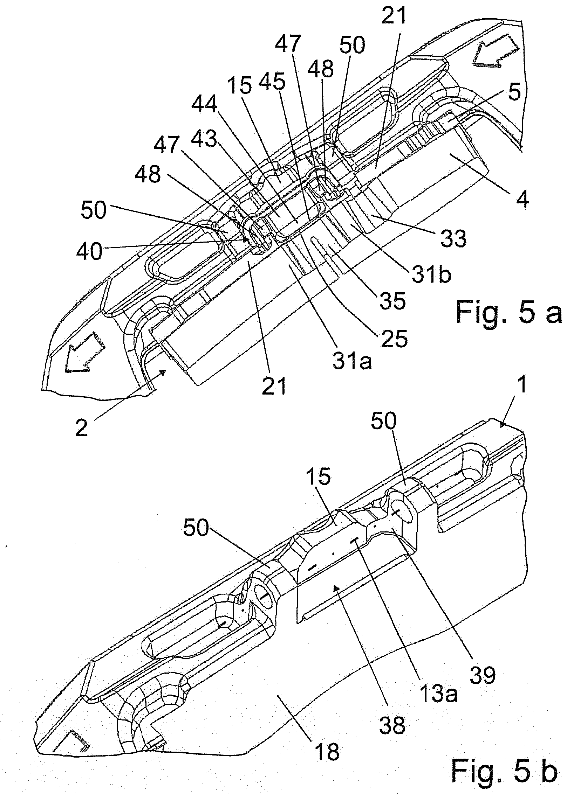

Gemäß Fig. 6 ist an der Rückseite 17 der Rückenplatte 5, unterhalb deren oberen Randes 21, einstückig ein Ansatz 40 angeformt. Der Ansatz 40 ist näher zu dem oberen Rand 21 als zu dem unteren Rand 22 der Rückenplatte 5 angeordnet. Er ist in Umfangsrichtung des Bremsbelags 2 mittig positioniert, weist also zu beiden Seitenrändern 23a, 23b denselben Abstand auf. Er ist zwecks seiner Abstützung auf einer korrespondierend gestalteten Fläche des Bremssattels 1 mit mindestens einer nach unten gerichteten Stützfläche 42 (Fig. 4) versehen. Diese steht rechtwinklig zu der Rückseite 17 der Rückenplatte 5 und stützt sich am Boden einer Ausnehmung 38 (Fig. 5b) ab, mit der der Bremssattels 1 versehen ist.

In einer Draufsicht von oben ist der Ansatz 40 von viereckigem Grundriss. Die beiden von der Rückseite 17 beabstandeten Außenecken 41 des Ansatzes 40 sind jeweils gerundet, mit einem Eckenradius R von jeweils mindestens 4 mm. Die Rundung der Ecken 41 hat fertigungstechnische Vorteile in Bezug auf die spanende Bearbeitung der korrespondierenden Ausnehmung 38 in dem Bremssattel 1 (Fig. 5b). Diese Ausnehmung 38 dient als Belagaufnahme, indem sie den Ansatz 40 des Bremsbelags zumindest zu einem Teil aufnimmt, und sie ist dafür mit korrespondierend gerundeten Innenecken 39 von mindestens 4 mm Eckenradius versehen.

Der Stützfläche 42 abgewandt ist an dem Ansatz 40 eine flache Niederhaltefläche 43 mit einer Breite von 10 bis 20 mm und einer Länge bzw. Tiefe von mindestens 7 mm ausgebildet. Die Niederhaltefläche 43 ist tiefer und damit näher an der Drehachse A angeordnet, als die Absenkung 25. Ausschließlich auf der Niederhaltefläche 43 stützt sich der Niederhalter 7 gegen den Bremsbelag ab, nämlich mit der eine Auflagefläche 12a bildenden Unterseite des auf die Kröpfung 11 folgenden, kurzen Längsabschnitts 12.

Der Längsabschnitt 12 ist zugleich der Endabschnitt des zweiten Endabschnitts 7c und damit des Niederhalters 7. Seine Stirnfläche steht einer Querwand jener Ausnehmung 38 des Bremssattels 1 gegenüber, die den Ansatz 40 zumindest teilweise aufnimmt.

An die Niederhaltefläche 43 für die Anlage des Niederhalters 7 schließt sich zu dem Reibbelag 4 hin eine im Vergleich kürzere Übergangsfläche 44 an. Die Übergangsfläche 44 steigt bis zu dem Boden der Absenkung 25 an, zum Beispiel in Gestalt einer Biegung oder alternativ einer schrägen Rampe. Die Übergangsfläche 44 trifft an einer Kante 45 auf den Boden der Absenkung 25, wobei gemäß Fig. 4 diese Kante 45 in einer Ebene der Rückenplatte 5 angeordnet ist, die sich zwischen der Ebene der Befestigungsfläche 16 und der Ebene der Rückseite 17 befindet.

An die Niederhaltefläche 43 schließt sich seitlich, also in Umfangsrichtung des Bremsbelags betrachtet, jeweils ein Randbereich 47 an, der die Niederhaltefläche 43 überragt. Der auf der Niederhaltefläche 43 abgestützte Endabschnitt 12 des zweiten Endabschnitts 7c des Niederhalters 7 wird daher von den zwei erhöhten Randbereichen 47 flankiert, wodurch der Niederhalter 7 kein oder wenig seitliches Spiel in Bezug auf den Bremsbelag 2 hat.

Bei montiertem Bügel 60 ist dieser nicht nur ein Widerlagerelement für die Blattfeder 9, sondern er ist zugleich auch ein Sperrelement. Denn die Randkonturen 64 der Laschen 63 bilden einen Anschlag, der nicht oder nur wenig zu gegenüberliegend am Ansatz 40 ausgebildeten Flächen beabstandet ist. Dies hat zur Folge, dass kein bzw. nur ein geringes Abheben des Bremsbelages 2 mit seiner Stützfläche 42 von dem Bremssattel möglich ist. Die genannte Sperrwirkung wird erreicht, indem in jedem der beiden Randbereiche 47 des Ansatzes 40 eine Rinne 48 ausgebildet ist, die den Gegenanschlag bildet.

In Umfangsrichtung des Bremsbelags 3 betrachtet, sind die Rinnen 48 vor bzw. hinter der Mitte der Rückenplatte 5 angeordnet, wobei ihr Abstand zu dieser Mitte derselbe ist. Jede Rinne 48 erstreckt sich längs der jeweiligen Seitenfläche 49 des Ansatzes 40. Der Boden jeder Rinne 48 ist dem Bolzen 13 zugewandt und liegt der jeweiligen Kontur 64 des Bügels 60 entweder mit geringem Abstand gegenüber, oder es besteht sogar ein dauernder Kontakt zwischen der Kontur 64 und dem Boden der Rinne 48. Falls kein dauernder Kontakt besteht, ist aber jedenfalls der Abstand gering und vor allem geringer als der Abstand des Bolzens 13 zu der Kröpfung 11 bzw. zu dem Endabschnitt 12 des Niederhalters 7.

Die Konturen 64 an dem als Sperrelement dienenden Bügel 60 bilden daher jeweils einen Anschlag, und die Rinnen 48 am Bremsbelag 2 bilden jeweils den Gegenanschlag. Sollte daher der Bremsbelag 2 aufgrund starker Erschütterungen nach oben schlagen, was zu einem gleich großen Anheben auch des Niederhalters 7 führt, ist diese Bewegung spätestens dann gesperrt, wenn die Rinne 48 gegen die Kontur 64 stößt. Eine noch größere Bewegung, welche dann ganz von der Blattfeder 9 aufgenommen werden müsste, wird verhindert und so die Lebensdauer der Blattfeder 9 verlängert.

Die Rinnen 48 können längs ihrer einen Seite, nämlich zu der jeweiligen Seitenfläche 49 des Ansatzes 40 hin, offen gestaltet sein. Die Rinnen 48 können an ihrem der Rückenplatte 5 abgewandten Ende offen sein. Der Rückenplatte 5 zugewandt sind sie von solcher Länge, dass sie sich nicht nur über die Tiefe des Ansatzes 40 erstrecken, sondern bis in die Dicke der Rückenplatte 5 hinein. Dadurch ist es möglich, dass der durch die Kontur 64 der Seitenabschnitte 63 gebildete Anschlag nahe der Rückenplatte 5 liegt. Dadurch wird ein Kippmoment im Falle eines Anschlagens am Bremsbelag 3 minimiert oder gar vermieden.

Fahrzeuginnenseitig ist der Niederhalter 7 nur gering gegenüber der Blattfeder 9 beabstandet, teilweise greift das eine Ende 9a der Blattfeder 9 sogar formschlüssig in die U-förmige Aussparung 7g des ersten Endabschnittes 7a des Niederhalters 7 ein. Der Eingriff der Blattfeder 7 in die Aussparung 7g gleicht der eines Hakeneingriffs in ein Widerlager.

Die Blattfeder 9 stützt sich mit dem an das hakenartige Federende 9a anschließenden Federsegment 9d an der oberen, dem Belagschacht 6 abgewandten Innenfläche 14b des Schlitzes 14 ab. Somit kann auch der innere der beiden Bremsbeläge durch die Wirkung des Niederhalters 7 nur geringfügig von seiner radialen Stützfläche abheben.

Insgesamt wird erreicht, dass die beiden Beläge 2, 3 mittels Federkraft radial zu der Scheibenbremsachse A gehalten sind, und dass im Falle des Abhebens eines oder beider Bremsbeläge der diesbezügliche Weg durch Anschläge und Gegenanschläge eng begrenzt ist.

Gemäß den Figuren 7 und 9 ist der Niederhalter 7 an seinem ersten Endabschnitt 7a mit zwei die Basis 7d des Niederhalters 7 unter einem Neigungswinkel fortsetzenden Seitenabschnitten 7k zu jeder Seite der ebenfalls in dem ersten Endabschnitt 7a angeordneten Aussparung 7g versehen. Die Seitenabschnitte 7k befinden sich in Verlängerung der Seitenflanken 7e, 7f des als Rinne gestalteten Mittelabschnitts 7b und weisen, in Längsrichtung des Niederhalters 7 betrachtet, einen im Vergleich zum Mittelabschnitt 7b abgewinkelten, jedoch in sich geraden Verlauf auf. Auch der restliche Teil des ersten Endabschnitts 7a ist relativ zu dem Mittelabschnitt 7b abgewinkelt.

Zu einer spielarmen Anpassung an die gegenüberliegende, kreisbogenförmige Rückwand 14a des Schlitzes 14 bildet den äußersten Abschluss des Niederhalters 7 die Stirnseite 7m, die sich auf einem entsprechenden Kreisbogen 27 erstreckt (Fig. 7). Der gedachte Kreismittelpunkt des Kreisbogens 27 befindet sich außerhalb des Niederhalters 7, nämlich über dem Mittelabschnitt 7b.

Die Figuren 11 und 12 zeigen eine andere Ausführungsform des Niederhalters 7. Denn in Bezug auf dessen Stabilität kann es von Vorteil sein, wenn die beiden Seitenflanken 7e, 7f zusätzlich verlängert sind, indem sie sich nicht nur entlang der langen, geraden Basis 7d, sondern auch entlang des dazu schräg angeordneten, ersten Endabschnitts 7a erstrecken.

Die insoweit zusätzlichen Seitenflankenabschnitte können dazu dienen, den im Schlitz 14 des Bremssattels sitzenden Niederhalter 7 in seitlicher Richtung gegenüber dem Bremssattel 1 zu stützen, sofern die Innenbreite zwischen den zusätzlichen Seitenflankenabschnitten gleich oder größer ist, als die Breite des Schlitzes 14.

Die Seitenflanken 7e, 7f sind in Bezug auf die Basis 7d steiler angestellt, als bei der ersten Ausführungsform des Niederhalters. Außerdem lässt Fig. 11 erkennen, dass die Höhe der Seitenflanken 7e, 7f zu dem zweiten Endabschnitt 7c hin abnimmt. Denn gerade in diesem weiter fahrzeugaußen liegenden Teil der Scheibenbremse existiert in der Praxis nur ein geringer Abstand zu dem umgebenden Fahrzeugrad, d.h. zu der Innenseite der Radfelge.

### Bezugszeichenliste

- 1: Bremssattel
- 2: Bremsbelag
- 3: Bremsbelag
- 4: Reibbelag
- 5: Rückenplatte
- 5a: Anschlag
- 6: Belagschacht
- 7: Niederhalter
- 7a: erster Endabschnitt
- 7b: Mittelabschnitt
- 7c: zweiter Endabschnitt
- 7d: Basis
- 7e: Seitenflanke
- 7f: Seitenflanke
- 7g: Aussparung
- 7k: Seitenabschnitt
- 7m: Stirnseite
- 8: Niederhalteanordnung
- 9: Blattfeder
- 9a: Ende der Blattfeder
- 9b: Mittelabschnitt
- 9c: Ende der Blattfeder
- 9d: Federabschnitt
- 9e: Biegung, Knick
- 9f: Biegung, Knick
- 10a: Formschlusselement
- 10c: Formschlusselement
- 11: Kröpfung
- 11a: Biegung
- 11b: Biegung
- 11c: gerade verlaufender Abschnitt
- 11d: Versteifungssicke
- 12: Längsabschnitt
- 12a: Auflagefläche
- 13: Bolzen
- 13a: Achse
- 14: Schlitz
- 14a: Rückwand
- 14b: obere Innenfläche
- 14c: untere Innenfläche
- 15: Vorsprung
- 16: Befestigungsfläche
- 17: Rückseite
- 18: Fläche
- 21: oberer Rand
- 22: unterer Rand
- 23a: Seitenrand
- 23b: Seitenrand
- 25: Absenkung in der Rückenplatte
- 27: Kreisbogen
- 31: oberer Rand
- 31a: Abschnitt
- 31b: Abschnitt
- 33: Ausnehmung
- 35: Absenkung im Reibbelag
- 38: Ausnehmung im Bremssattel
- 39: Innenecke
- 40: Ansatz
- 41: Ecke
- 42: Stützfläche
- 43: Niederhaltefläche
- 44: Übergangsfläche
- 45: Kante
- 47: Randbereich
- 48: Rinne
- 49: Seite
- 50: Lagerbock
- 60: Bügel, Widerlagerelement, Sperrelement
- 61: Öffnung
- 62: Mittelabschnitt
- 62a: Widerlager
- 63: Seitenabschnitt, Lasche
- 64: Kontur, Anschlag
- 66: Öffnung

- A: Achse, Drehachse der Bremsscheibe
- A1: Abstand
- A2: Abstand
- A3: Drehachse Scheibenfräser
- B: Breite
- F: Scheibenfräser
- L: Länge des Endabschnitts
- L1: Längsmittellinie
- M: Materialdicke
- R: Eckenradius
- W: Winkel

## Patentansprüche

1. Blattfeder (9) und Niederhalter (7)
einer Niederhalteranordnung für die Bremsbeläge einer Fahrzeug-Scheibenbremse,
wobei sich die Blattfeder (9) im montierten Zustand auf der Außenseite des als starrer Bügel ausgebildeten Niederhalters längs diesem erstreckt, von außen her gegen den Niederhalter (7) abgestützt ist,
und zwei Hauptseiten (9.1, 9.2) und aufeinanderfolgend ein erstes Federende (9a), einen Federmittelabschnitt (9b) und ein zweitens Federende (9c) aufweist,
**dadurch gekennzeichnet,**
**dass** den Abschluss der Federenden (9a, 9c) jeweils Formschlusselemente (10a, 10c) bilden, die sich bezüglich der Hauptseiten (9.1, 9.2) derart in entgegengesetzte Richtungen von den Hauptseiten weg erstrecken, dass sich das erste Formschlusselement (10a) auf der ersten Hauptseite (9.1), und das zweite Formschlusselement (10c) auf der zweiten Hauptseite (9.2) befindet, und
wobei die Blattfeder auf dem Federmittelabschnitt (9b) mindestens zwei Biegungen (9f, 9e) entgegengesetzter Biegerichtung aufweist,
von denen sich die Biegungsaußenseite der am nächsten zu dem ersten Federende (9a) angeordneten Biegung (9f) auf der zweiten Hauptseite (9.2), und
die Biegungsaußenseite der mindestens einen weiteren Biegung (9e) auf der ersten Hauptseite (9.1) befindet, und
**dass** der Niederhalter (7) an einem Ende mit einer Aussparung (7g) versehen ist, in die das erste Formschlusselement (10a) der Blattfeder (9) zur Verriegelung in Längsrichtung formschlüssig eingreift..

## Claims

1. Leaf spring (9) and hold-down device (7)
of a hold-down assembly for brake pads of an automotive disc brake,
wherein, in the mounted state, the leaf spring (9) extends on the outside of the hold-down device formed as a rigid bracket longitudinally along the latter, is supported from the outside against the hold-down device (7), and
having two main sides (9.1, 9.2) and consecutively a first spring end (9a), an intermediate spring portion (9b) and a second spring end (9c),
**characterized in**
**that** the terminal part of each spring end (9a, 9c) is formed by positive fit elements (10a, 10c) which extend relative to the main sides (9.1, 9.2) in opposite directions away from the main sides in such a way that the first positive fit element (10a) is on the first main side (9.1) and that the second positive fit element (10c) is on the second main side (9.2), and
wherein the leaf spring has at least two bends (9f, 9e) on the intermediate spring portion (9b) of opposite bending directions,
of which the outside of the bend of the bend (9f) closest to the first spring end (9a) is on the second main side (9.2) and
the outside of the bend of the at least one further bend (9e) is on the first main side (9.1),
and in that the hold-down device (7) is provided at one end with a recess (7g), into which the first positive fit element (10a) of the leaf spring (9) engages in a positive fit for locking in the longitudinal direction.

## Revendications

1. Ressort à lames (9) et serre-flan (7)
d'un ensemble de serre-flan pour les garnitures de frein d'un frein à disque de véhicule,
dans lequel, à l'état monté, le ressort à lames (9) s'étend sur la face extérieure du serre-flan réalisé sous la forme d'un étrier rigide le long de celui-ci, est en appui de l'extérieur contre le serre-flan (7), et
avec deux faces principales (9.1, 9.2) et successivement une première extrémité de ressort (9a), une partie centrale de ressort (9b) et une deuxième extrémité de ressort (9c),
**caractérisé en ce**
**que** respectivement des éléments de complémentarité de formes (10a, 10c), qui s'étendent à distance des faces principales dans des directions opposées par rapport aux faces principales (9.1, 9.2), de telle sorte que le premier élément de complémentarité de formes (10a) se trouve sur la première face principale (9.1) et le deuxième élément de complémentarité de formes (10c) sur la deuxième face principale (9.2), forment la fin des extrémités de ressort (9a, 9c), et
dans lequel le ressort à lames présente sur la partie centrale de ressort (9b) au moins deux courbures (9f, 9e) de direction de courbure opposée,
dont la face extérieure de courbure de la courbure (9f) disposée le plus près de la première extrémité de ressort (9a) se trouve sur la deuxième face principale (9.2), et
la face extérieure de courbure de la au moins une autre courbure (9e) se trouve sur la première face principale (9.1),
et en ce que le serre-flan (7) est pourvu à une extrémité d'un évidement (7g), dans lequel le premier élément de complémentarité de formes (10a) du ressort à lames (9) s'engage par complémentarité de formes pour un verrouillage dans la direction longitudinale.
